# EUROPEAN PATENT APPLICATION

(11) **EP 3 125 490 A1**
(43) Date of publication of application: **01.02.2017**
(21) Application number: 15382388.5
(22) Date of filing: 27.07.2015
(51) Int. Cl.: H04L 29/06

(54) **A METHOD AND COMPUTER PROGRAM PRODUCTS FOR PROBING THE STATUS OF AN IP-BASED COMMUNICATION CONNECTION IN ORDER TO RECEIVE AN INCOMING COMMUNICATION**

(71) Applicant: Telefonica Digital España, S.L.U., 28013 Madrid (ES)
(72) Inventor: Neystadt, John Eugene, 44471 Kfar-Saba (IL); Lantz, Johan, 28013 Madird (ES)
(74) Representative: Carlos Hernando, Borja

(57) **Abstract**

A method and computer program products for probing the status of an IP-based communication connection in order to receive an incoming communication, the method comprising: receiving a request at a communication session controller (200) for establishing a communication session with a computing device (100) of a called user, and the sending, by the communication session controller (200) to said computing device (100), of a transport layer probe packet, or set thereof, to check IP-based connection availability of said computing device (100) for establishing an IP-based communication session.

## Description

### Technical field

The present invention is directed, in general, to IP-based communications. In particular, the invention relates to a method, and computer programs products, for probing the status of an IP-based communication connection in order to receive an incoming communication such as a call.

### Background of the invention

All communication applications such as VoIP and messaging users rely on high level signaling to establish connections, make calls and send messages to their peers. Due to the inherit nature of the Internet several problems occur with this model. Some of the most troublesome ones are the time it takes to reach a peer, the time it takes to detect that a peer is dead and how to maintain a connection alive through various network elements in-the-middle such as NAT/Firewalls.

For any real time communication service that should be able to accept incoming communications there is always a problem that the state of the receiving peer is unknown. If the server connects to the users using a connection-oriented protocol such as TCP/TLS then it may have some information available since it can check if the connection is valid on socket level or not. In many scenarios this is however not a reliable method since these connections might terminate in a network element in-the-middle, which might be able to keep that part of the connection open while on the other end, it is not. This means that when a server or remote user wants to initiate communications it is not certain that the remote peer is reachable even if some indicators point to that. When establishing a call or sending a message to an Over-the-Top (OTT) communication application running on a smartphone or similar computing device two options are available:
1. Using a pre-existing data connection (normally over TCP/TLS or UDP) to send for instance a SIP INVITE or MESSAGE or the corresponding message of another high-level protocol.
2. Relying on push notifications that will offload the establishment/maintenance of the connection to the Operating System (OS).

There are some dual services, like Telefonica's TuGo®, that allow communications to be established either as a VoIP communication between a VoIP Server and a VoIP OTT communication application or as a standard circuit-switched call. In this case, there is therefore a third additional alternative:

### 3. Routing the call or message over a Circuit-Switched connection.

The main problem today is that due to the uncertainty of the status of the Packet-Switched TCP-level connection (e.g. socket) and the time it takes to verify it, a dual VoIP/Circuit-Switched communication service, such as Telefonica's TuGo®, cannot risk to only rely on trying to setup a call as a VoIP OTT call over Packet-Switched connection. Instead, the service will try to reach the user terminal in any way possible and in parallel. This has deemed necessary in order to not degrade the normal call experience.

The issue with this is that very few incoming calls are effectively connected over a Packet-Switched connection, which may not be the best approach in certain circumstances or according to the service policies. For instance some communication applications may prefer communications to be established over a Packet-Switched connection for the sake of resource optimization, e.g. to offload the more congested mobile network towards WiFi connections.

Currently, the simplest solution for probing the status of a Packet -Switched TCP-level connection is to use the ping-pong heartbeat mechanism described in RFC5626. This method consists of that one peer sends a double CRLFCRLF packet that upon successful reception is answered by a single CRLF. When the initiator receives this reply, it can assume that the connection is still available. However, even this alternative comes with some question marks:
- The ping packets sent directly on top of the TCP connection will be depending on a OS specific timeout value before it can be determined that all retransmission has failed and that the connection will have to be reset. This retransmission timeout is typically much lower than for the SIP INVITE trying to establish the call but will probably still be in the rage of 10 seconds. If the objective is to determine if an incoming call be connected or not, this value is way too high since the caller will have ended the call before other means to connect it can be evaluated.
- If the communication application is in sleep or hibernate mode, it must wake up to answer the ping packet to let the server know it is alive. Waking up the communication application takes an unknown amount of time.

### Description of the Invention

Embodiments of the present invention provide a way to probe a communication connection, before or in parallel, to establishing incoming IP-based communications in order to adjust the expectations on the chances to get the incoming communications established in an appropriate time and to eventually manage the service logic accordingly.

To that end, present invention provides according to a first aspect a method for probing the status of an IP-based connection in order to receive an incoming communication, the method comprising receiving a request at a communication session controller for establishing a communication session with a called user; and sending, by the communication session controller to a computing device of the called user a transport layer probe packet, or set thereof. Therefore, the I P-based connection with the computing device is probed to be active if the communication session controller receives an acknowledgment message relating to the transport layer probe packet from a transport layer stack of a chipset of the computing device, or alternatively, the IP-based connection with the computing device is probed to be inactive if the communication session controller does not receives from the transport layer stack, in a certain period of time, at least one acknowledgment message corresponding to the probe packet, or set thereof.

According to the proposed method, the computing device is connected to a cellular network and the transport layer probe packet has a lower length than the one that would require for its transmission to the computing device through said cellular network that the computing device transitions from a radio resource control status in which data is transmitted over a shared radio channel (e.g. CELL-FACH) to a radio resource control status in which data is transmitted over a dedicated radio channel (e.g. CELL_DCH).

According to a preferred embodiment, the transport layer probe packet is a zero length TCP packet.

In an embodiment, upon the IP-based connection with the computing device is probed to be active, the communication session controller further sends to the computing device a message request to establish an IP-based communication session, preferably a SIP INVITE message.

Alternatively, prior to the IP-based connection with the computing device being probed to be active but before the IP-based connection being probed to be inactive, i.e. before the certain period of time being exceed, the communication session controller sends to the computing device a message request, preferably a SIP INVITE message, to establish an IP-based communication session.

Preferably, the certain period of time is configured to be equal or less than 1 second.

In an embodiment, upon the IP-based connection with the computing device is probed to be inactive, the computing device is removed from a list (for instance stored in an arbitrary storage server) of computing devices of said called user with an active IP-based connection. Then, a push server may send a push notification to said computing device to request the establishment by said computing device of an IP-based connection with the communication session controller.

In another embodiment, upon the IP-based connection with the computing device is probed to be inactive, the communication session controller further initiates a circuit-switched call with the computing device.

Other embodiments of the invention that are disclosed herein also include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Present invention increases the reliability and efficiency in how it is determined that a Packet-Switched TCP-level connection is available for connecting an incoming call. Furthermore, present invention removes the long timeout (nine seconds currently) that is used to determine that a TCP timeout has occurred.

Moreover, present invention allows an Operation Business (OB) to define how long it is acceptable to wait for the verification of a Packet-Switched TCP-level connection before the Circuit-Switched routing and/or Push Notification option triggers, hence allowing prioritizing Packet-Switched.

### Brief Description of the Drawings

The previous and other advantages and features will be more deeply understood from the following detailed description of embodiments, with reference to the attached drawings, which must be considered in an illustrative and non-limiting manner, in which:

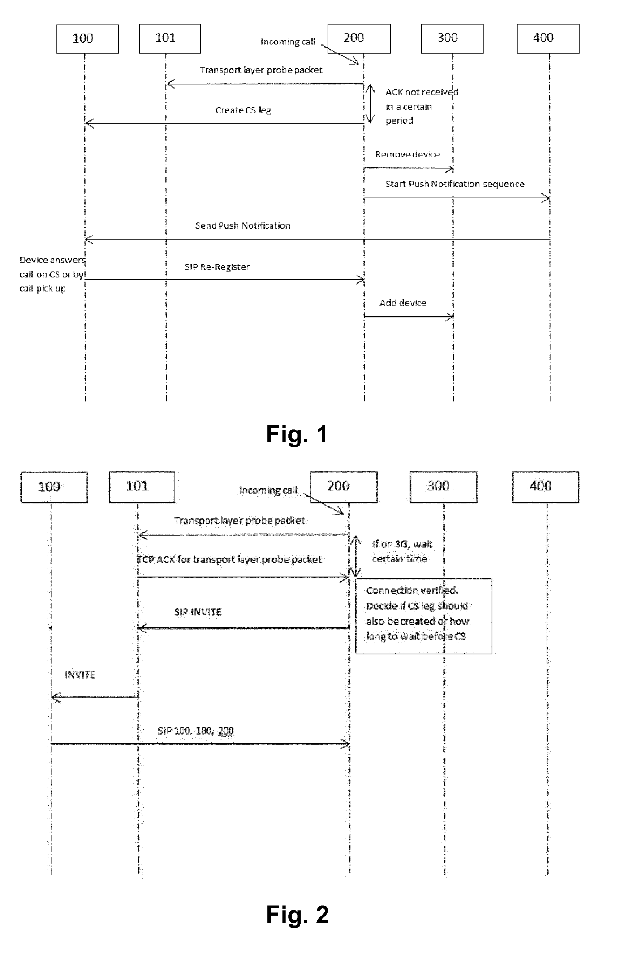

Fig. 1 is a flow diagram illustrating an embodiment of a method for probing the status of an IP-based connection in order to receive an incoming communication. In this case, the diagram illustrates a case of using a transport layer probe packet to confirm a working Packet-Switched TCP-level connection, which results in the connection been probed inactive what makes the service to fall back to alternative procedures.
Fig. 2 is a flow diagram illustrating another embodiment of a method for probing the status of an IP-based connection in order to receive an incoming communication. In this case, the diagram illustrates a case of using a transport layer probe packet to confirm a working Packet-Switched TCP-level connection, which results in the connection been probed active.

### Detailed Description of the Invention and of Several Embodiments

Even though the following description of the invention has been drafted using the SIP protocol as the signaling protocol for call establishment, the proposed method is not restricted to the use of this particular signaling protocol, as an expert in the field would appreciate.

In a system that is capable of connecting calls, as an OTT VoIP call over a Packet-Switched connection, as well as a native Circuit-Switched call, a decision has to be taken as early as possible on the best possible way to connect an incoming call. While the Packet-Switched leg might be desirable for offloading reasons, the risk of failing to connect the call that way is higher than using the traditional a Circuit-Switched connection.

For the mobile operator it might be desirable to try and connect calls over Packet-Switched first and then fallback to the alternatives. However, it is critical to detect any failure in the Packet-Switched path as early as possible in order to be able to employ other connection alternatives (such as sending a push notification to establish a new Packet-Switched TCP-level connection, or to route the call over a Circuit-Switched) before the caller hangs up due to lack of response.

Naturally all ways to establish the call can be tried at the same time but this comes with the consequences that:
- If the Circuit-Switched leg is established at the same time as the Packet-Switched leg, it is likely to be connected before the Packet-Switched leg is ready, thus eliminating the possibility for Packet-Switched/WiFi call setup in the majority of the cases.
- Collisions in the receiving terminal are inevitable since the Packet-Switched and Circuit-Switched legs will both reach the users. In the best case the Packet-Switched call is silently rejected since there is already a Circuit-Switched call active and in the worst case an answered Packet-Switched call will have to be terminated since the Operative System (OS) does not allow to programmatically rejecting Circuit-Switched calls. The fact that a single incoming call is alerted as both as an OTT call over Packet-Switched and as a native Circuit-Switched call may be confusing and annoying for the final user, having a very negative impact on the user experience.
- The use of Push notifications will further add to the collision risk and potentially degrade the user experience. Therefore they should be considered the last resort.

To that end, present invention proposes a way to probe the status of a Packet-Switched TCP-level connection to increase the possibility of connecting an incoming call over a pre-existing Packet-Switched TCP-level connection, but also to determine as quickly as possible when an alternative should be tried instead, like establishing a new Packet-Switched TCP-level connection with help of a push notification or routing the call as a Circuit-Switched call.

Characteristically, present invention proposes to send a signaling message or transport layer probe packet, or set thereof, preferably a zero length TCP packet, to the called user just before or in parallel with a SIP INVITE message. In addition, if deemed necessary a burst of 2-4 zero length packages can be sent to increase reliability. Each packet will request an ACK from the recipient and this ACK will be used to determine the validity of the connection at the edge of the network.

By applying the proposed method, the reply to the ping will be generated as an ACK packet produced by a transport layer stack (TCP/IP stack) 101 on a chipset of computing device 100 of the called user with no dependency on the communication application layer to react or wakeup. This combines a zero byte overhead with the effectiveness of native processing by the computing device chipset guaranteeing it will be the fastest possible way to obtain a status report of the condition of the connection from the remote peer.

Employing the proposed method the system should quickly be able to make a high probability decision within less than one second on whether the call can be successfully established over Packet-Switched in a reasonable amount of time. Reaching this low delay will make it possible to first evaluate the Packet-Switched option instead of trying all options in parallel. If the probing fails, the invite dialog will be cancelled and the Circuit-Switched leg created.

Moreover, a push notification can also be sent in parallel to reach users that are not capable of conducting Circuit-Switched calls (e.g. tablet with no mobile connection) but having WiFi connection whereas no active TCP-level connection between the server and the communication application, e.g. due to the communication application being in terminated state. Depending on the service logic and preferences, the push notification can be also sent to the computing devices that are capable of conducting Circuit-Switched calls, either in parallel to creating the Circuit-Switched leg or after a pre-established period of time, so that the call can be delivered even if the computing device is out of Circuit-Switched coverage.

With reference now to Fig. 1 therein it is illustrated an embodiment of the proposed method, where on the left it can be seen the user computing device 100 (having installed a communication application for receiving communications such as calls) and also the device's internal transport layer stack 101, and on the right it can be seen a generic communication session controller (such as a Session border controller, SBC) 200, a hardware device and/or a software application, acting as the termination point in the network for the called user and governing the manner in which calls are initiated, conducted and terminated. Element 300 is an arbitrary storage server keeping track of which computing devices are considered as connected to the service (for instance TuGo®) at any given moment. If a computing device does not respond as expected to a signaling message or heartbeat, it will be removed from this storage server and considered as not able to communicate until the next time it updates its status using a new connection. Finally the Push Server 400 is any server capable of delivering pushed notifications to the computing device 100 (in particular to its OS) for further propagation to the proper communication application (including starting a communication application that has been terminated by the called user or the OS).

Securing this way of probing the Packet-Switched TCP-level connection first will offer new possibilities of configuring the service behavior to offload to WiFi without compromising the native calling experience (except for introducing in some embodiments a minimal delay of at most one second before the Circuit-Switched and optionally the Push Notification fallback options sets in).

Fig. 2 presents another embodiment of the proposed method. The transport layer probe packet triggers a TCP ACK internally in the transport layer stack 101, not involving the application layer at all (providing minimal latency).

Additionally if the communication session controller 200 sending the SIP INVITE message is aware of the connection type the computing device 100 is residing on, it may decide to wait an undisclosed amount of time between sending the transport layer probe packet and sending the SIP INVITE message.

It should be noted that in a 3G network present invention comes with another benefit. In a 3G network the radio connection of user computing device 100 can reside in various states (as described in TS 25.303). The state machine offers a way to conserve network resources and device battery by trading responsiveness and connectivity speed. At the low end it has been found the states CELL-PCH and URA-PCH where the computing device 100 is not able to send or receive data and to receive incoming traffic it needs to be paged before being able to move to a higher state to receive any incoming information, a slow process and due to this, this state is not used unless the computing device 100 does not transmit or receive any data during a reasonably long period. On top of this low power, low bandwidth states are CELL-FACH, which provides the computing device 100 a shared radio channel, also utilized by many other computing devices. This shared radio channel allows the computing device 100 to send and receive small amounts of data but it is at least responsive and does not consume a lot of battery. Finally on top of CELL-FACH are the faster radio channels such as the dedicated CELL-DCH and HSPA radio channels used when there is a meaningful amount of data being transmitted. For a fairly active computing device the most common state to reside in when on a 3G connection is CELL-FACH. However in that state, in order to receive a complete SIP INVITE message the computing device would first have to go through a series of network signaling to move to a dedicated radio channel CELL-DCH, a process that can take a couple of seconds. After that, the called user would have to answer with the SIP 100 TRYING before the server has any idea that the call will ring using this connection. This delay is way too long to hold back the CN+PN options for.

When on a shared 3G connection delaying the sending of the SIP INVITE message will allow the transport layer probe packet to reach the computing device 100 on the shared (low bandwidth) data channel and also for the called user to send the ACK on the shared uplink. Doing this just before the SIP INVITE message is sent will allow the communication session controller 200 to receive the ACK confirming the validity of the connection before the SIP INVITE message triggers the state changes needed to move to a dedicated radio channel in order to process the SIP packet. The objective with this is naturally to confirm the radio channel existence as fast as possible without the need of waiting for the transition to the dedicated radio channel.

By using the transport layer probe packet the computing device 100 when on a shared 3G radio channel will receive the probe packet on the shared downlink and also answer it on the shared uplink (RACH), due to the small size of the probe packet. Even in the less likely case when the computing device 100 is on URA or CELL-PCH it would be beneficial to only have to transit to CELL-FACH to answer the probe packet before the INVITE forces the transition to CELL-DCH. All in all this will reduce the time needed to determine if the connection is valid or not.

The proposed invention may be implemented in hardware, software, firmware, or any combination thereof. If implemented in software, the functions may be stored on or encoded as one or more instructions or code on a computer-readable medium.

Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media. Any processor and the storage medium may reside in an ASIC. The ASIC may reside in a user terminal. In the alternative, the processor and the storage medium may reside as discrete components in a user terminal.

As used herein, computer program products comprising computer-readable media including all forms of computer-readable medium except, to the extent that such media is deemed to be non-statutory, transitory propagating signals.

The scope of the present invention is defined in the following set of claims.

## Claims

1. A method for probing the status of an IP-based connection in order to receive an incoming communication, the method comprising receiving a request at a communication session controller (200) for establishing a communication session with a computing device (100) of a called user, the method being **characterized in that** it further comprises the sending, by the communication session controller (200) to said computing device (100), of a transport layer probe packet, or set thereof, to check IP-based connection availability of said computing device (100) for establishing an IP-based communication session,
wherein:
- the IP-based connection with the computing device (100) being probed to be active upon the communication session controller (200) having received from a transport layer stack (101) of a chipset of the computing device (100) an acknowledgement message relating to the transport layer probe packet; or
- the IP-based connection with the computing device (100) being probed to be inactive upon the communication session controller (200) not receiving from the transport layer stack (101), in a certain period of time, at least one acknowledgment message relating to the transport layer probe packet, or set thereof.

2. The method of claim 1, wherein the computing device (100) is connected to a cellular network, and wherein the transport layer probe packet has a lower length than the one that would require for its transmission to the computing device (100) through said cellular network that the computing device (100) transitions from a radio resource control status in which data is transmitted over a shared radio channel to a radio resource control status in which data is transmitted over a dedicated radio channel.

3. The method of claim 1, wherein the transport layer probe packet is a zero length TCP packet.

4. The method of previous claims, wherein, upon the IP-based connection with said computing device (100) being probed to be active, the communication session controller (200) further sends to the computing device (100) a message request to establish an IP-based communication session.

5. The method of claim 1, wherein, prior to the IP-based connection with the computing device (100) being probed to be active but before the IP-based connection being probed to be inactive, the communication session controller (200) sends to the computing device (100) a message request to establish an IP-based communication session, the method further comprising cancelling, by the communication session controller (200), said IP-based communication session establishment request upon the IP-based connection being probed to be inactive.

6. The method of claim 4 or 5, wherein said message request is a SIP INVITE message request.

7. The method of claim 1, further comprising, upon the IP-based connection with the computing device (100) being probed to be inactive, removing the computing device (100) from a list of computing devices of said called user with an active IP-based connection.

8. The method of claim 1 or 5, wherein upon the IP-based connection with the computing device (100) being probed to be inactive, further comprising sending, by a push server (400) a push notification to said computing device (100) to request the establishment by said computing device (100) of an IP-based connection with the communication session controller (200).

9. The method of claim 1 or 5, wherein upon the IP-based connection with the computing device (100) being probed to be inactive, further comprising initiating by the communication session controller (200) a circuit-switched call with the computing device (100).

10. The method of claim 1, wherein the certain period of time is equal or less than 1 second.

11. A computer program product comprising code instructions that when executed on a computer system implements the method steps of claim 1.
